# EUROPEAN PATENT APPLICATION

(11) **EP 1 637 992 A2**
(43) Date of publication of application: **22.03.2006**
(21) Application number: 05020173.0
(22) Date of filing: 15.09.2005
(51) Int. Cl.: G06F 9/44

(54) **Creating and using a building block**

(30) Priority: 20.09.2004 US 945558
(71) Applicant: SAP AG, 69190 Walldorf (DE)
(72) Inventor: Herter, Klaus, 69181 Leimen (DE); Kalthoff, Wolfgang, Whitefield, Bangalore 560066 (IN); Moser, Gerd, Westmount, Québec H3Z 1G2 (CA); Schmitt, Matthias, 69124 Heidelberg (DE); Staeck, Jens, 69124 Heidelberg (DE)
(74) Representative: Walter, Philipe

(57) **Abstract**

A method of creating a building block includes receiving, in a computer system that includes building blocks, a user input to create a composite building block that is associated with at least two of the building blocks. The method includes creating the composite building block in response to the user input, the composite building block being self-similar to the building blocks. The composite building block may be associated with a method or a relationship of one of the at least two building blocks. A method of using building blocks includes receiving, in a computer system that includes building blocks, a call for a function available in a composite building block. The composite building block is self-similar to the building blocks. The function is performed in response to the call. The composite building block inherits the function from one of the building blocks.

## Description

### TECHNICAL FIELD

This description relates to creating and using a building block in a computer system.

### BACKGROUND

Computer systems typically include one or more application programs that process data for a specific purpose. For example, a sales transaction application may be capable of receiving sales orders input by users and initiating product delivery to a named customer. In these operations, the application program will handle information regarding the product and the customer, to name just two examples. Particularly, a delivery address may be registered for shipping the goods. An address typically contains several distinct parts, such as a street name, a city name, and a zip (or postal) code. The system may handle these different parts collectively or individually.

Some existing systems include building blocks that correspond to information or data. In the above example, each of the street, city and zip code may correspond to one of several building blocks that are stored in a repository of the system. Each of the building blocks may include one or more methods that can be performed upon calling the particular block. For example, the method may involve reading or writing the particular data, or verifying its accuracy. Accordingly, the building block may include data that has been retrieved using its read method, such as a zip code or a street name. The decision to create such building blocks for particular data determines a granularity of the items that are stored in the repository. Building blocks typically are directly implemented in coding.

More sophisticated systems may include relationships between building blocks. This allows a caller to navigate from one building block to another. Typically, such relationships are created when two building blocks are associated with each other in the processing performed by the application program. For example, there may be a relationship between a city building block and a zip code building block, because these items typically are located close to each other in the shipping address. Accordingly, it may be said that such relationships expose the data model of the repository by allowing the caller to understand how the items are associated with each other.

However, these systems may have disadvantages. For example, the building blocks typically are made rather elementary to ensure that they are flexible enough to be used for a variety of purposes. On the other hand, such a fine granularity may be unsuitable to the demands of the caller. For example, in a given situation most callers may have to call many different building blocks to achieve the sought result. Moreover, the callers must deal with the data model, which may be relatively technical.

### SUMMARY

The invention relates to creating and using building blocks.

ln a first general aspect, a method of creating a building block comprises receiving, in a computer system that includes a plurality of building blocks, a user input to create a composite building block that is associated with at least two of the building blocks. The method comprises creating the composite building block in response to the user input, the composite building block being self-similar to the plurality of building blocks.

In selected embodiments, creating the composite building block comprises associating with the composite building block a method of one of the at least two building blocks. Creating the composite building block may comprise associating a relationship of one of the at least two building blocks with the composite building block.

In selected embodiments, the composite building block is self-similar to the plurality of building blocks because the composite building block has a common behavior with the plurality of building blocks. The common behavior may include that the composite building block makes a method available for execution and makes a relationship available for navigation.

ln selected embodiments, the user input specifies that one of the at least two building blocks is a root building block. The root building block may be associated with a first identifier, and the method may further comprise associating a second identifier with the composite building block, the second identifier beginning with the first identifier. When another of the at least two building blocks is associated with a third identifier, the method may further comprise extending the second identifier with the third identifier after the first identifier.

When the composite building block is associated with several of the building blocks including the at least two building blocks, and when each of the several building blocks includes a relationship to another of the several building blocks forming an order of the several building blocks, the method may further comprise extending the second identifier, after the first identifier, with identifiers of the several building blocks in the order of the several building blocks.

A composite building block may include another composite building block. For example, there may be created an additional composite building block that is associated with the composite building block and at least one other of the building blocks.

In a second general aspect, a method of using building blocks comprises receiving, in a computer system that includes building blocks, a call for a function available in a composite building block. The composite building block is self-similar to the building blocks. The method comprises performing the function in response to the call, which function the composite building block inherits from one of the building blocks.

In selected embodiments, the function is a method of one of the at least two building blocks. The function may be a relationship of one of the at least two building blocks.

Advantages of the systems and techniques described herein may include any or all of the following: Providing improved building blocks; providing an improved modeling of a building block that includes features of other blocks; providing building block modeling as defined and needed by business processes; providing building block modeling without the need for additional programming; providing that building block modeling can be done later in time than the definition of underlying building blocks; providing improved execution of a building block method; providing improved navigation according to a building block relationship; and providing building blocks of very different granularity.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

Figure 1 schematically shows building blocks in a computer system;
Figures 2A and 2B show a composite building block being created;
Figures 3 and 4 are flow charts of embodiments of inventive methods; and
Figure 5 shows a block diagram of a general computer system.

Like reference numerals in the various drawings indicate like elements.

### DETAILED DESCRIPTION

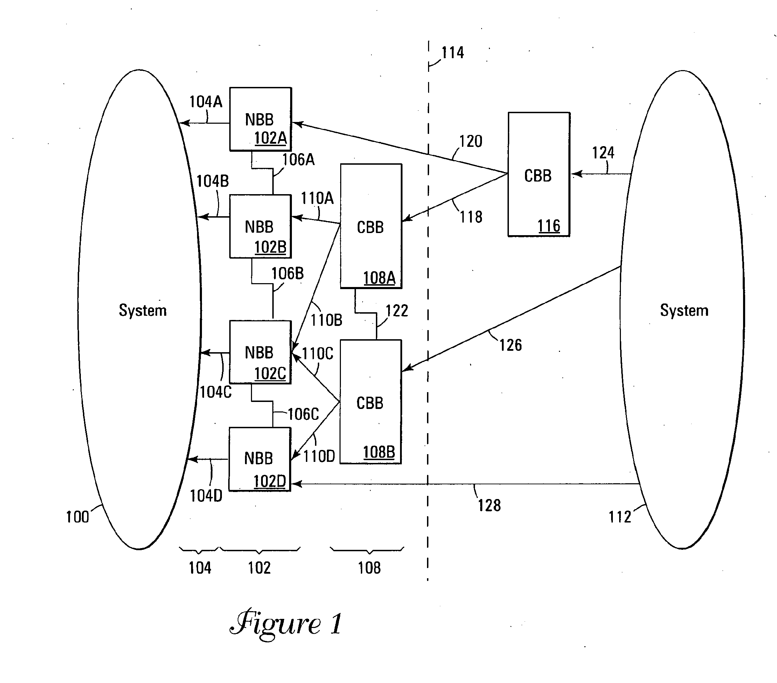

Figure 1 shows a first system 100 for which native building blocks (NBBs) 102 have been created using existing technology. Each of the NBBs can be called to perform one or more methods that are associated with the respective NBB. Performing the methods is schematically illustrated by arrows 104 from the NBBs to the first system. Accordingly, a first NBB 102A can be called to have a method 104A performed on the system, and so on with respective NBBs 102B, 102C and 104D. Each of the methods 104 may be a read method, a write method, a data verification method, and combinations thereof, to name just a few examples. Here, the NBBs are stored in a repository of the first system.

The NBBs 102 can have relationships 106 with each other. For example, the NBB 102A has a relationship 106A that allows a caller to navigate from the NBB 102A to the NBB 102B. Similarly, the NBB 102B has a relationship 106B to the NBB 102C, and the NBB 102C has a relationship 106C to the NBB 102D. Accordingly, a caller can use any or all of the relationships 106 to navigate among the NBBs.

There has been created two composite building blocks (CBBs) 108 for the first system 100. The CBBs are self-similar to any and all of the NBBs 102, meaning that when a building block is called; the caller need not be aware whether the called block is an NBB or a CBB. Moreover, it may be impossible for the caller to distinguish an NBB from a CBB. As an example, the CBB may have a common behavior with the NBBs. Such a common behavior may include that the CBB makes a method of an underlying NBB available to the caller for execution. As another example, the common behavior may include that the CBB makes a relationship of an underlying NBB available to the caller for navigation. A CBB can be formed from one or more NBBs and/or CBBs.

Each of the CBBs is associated with two or more building blocks. Here, a first CBB 108A is associated with the NBB 102B and with the NBB 102C, as indicated by respective arrows 110A and 110B. A second CBB 108B is associated with the NBB 102C and with the NBB 102D, as indicated by respective arrows 110C and 110D. Accordingly, the CBB 108A and the CBB 108B are both associated with the NBB 102C.

Each of the CBBs may be created using a declarative mapping for its respective NBBs. An advantage of this is that no further coding may be necessary. That is, while the NBBs may be directly implemented in coding, the CBBs may be implemented by the declarative mapping without the need for further coding.

A CBB may inherit a method of an NBB with which it is associated. Upon creating the CBB, the system may associate a method of the NBB with the CBB. For example, the system may associate methods 104B and 104C with the CBB 108A upon creating it. Accordingly, the methods of the underlying NBBs may be aggregated in the created CBB.

The CBB makes the associated methods available to a caller for execution. Because the CBB is self-similar to the NBBs, the caller need not be aware that the executed methods are inherited from the NBBs. When the caller of the CBB requests method execution, the method may be executed in the NBB from which it is inherited. If, for example, the NBB 102B corresponds to a zip code, the method 104B may be a read method that reads a zip code, and after executing the method the CBB may include the zip code read with the method 104B.

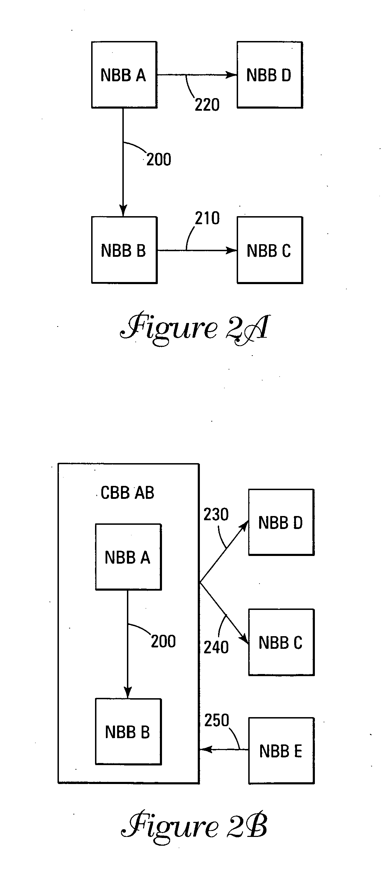

Another specific example involves the CBB inheriting a relationship from the underlying NBB, and this will now be described with reference also to Figures 2A and 2B. Initially, a system includes four building blocks: NBB A, NBB B, NBB C and NBB D. The NBB A includes a relationship 200 to the NBB B, and the NBB B includes a relationship 210 to the NBB C. The NBB A also includes a relationship 220 to the NBB D. As an example, a caller of the NBB A navigates to the NBB B (and from there, onward to NBB C), and to NBB D.

There is created a CBB AB (Figure 2B) that is associated with the NBB A and the NBB B. The CBB AB is schematically illustrated as encompassing the two NBBs. Upon the CBB AB being created, some or all relationships of the underlying NBBs may be associated with the CBB. For example, the system may associate the relationship 210 with the CBB AB. This relationship is therefore shown as a relationship 230 from the CBB AB to the NBB D. Similarly, the system associates the relationship 220 with the CBB AB and this relationship is therefore shown as a relationship 240 to the NBB C. The CBB AB makes the relationships 230 and 240 available to callers.

Finally, the relationship 200 remains useable by a caller of the NBB A for navigating to the NBB B. This relationship has less significance, though, to a caller of the CBB AB. The system may therefore determine, upon creating the CBB AB, whether any relationship of the two NBBs identifies another of the NBBs with which the CBB is to be associated. lf so, the system may ignore that relationship in the creation. On the contrary, relationships that do identify NBBs (or other CBBs) that are not involved in the CBB should be included.

The created CBB AB can be identified in a relationship held by another building block, such as an exemplary NBB E as shown in Figure 2B. Accordingly, the NBB E may include a relationship 250 that allows a caller to navigate to the CBB AB.

Referring again to Figure 1, there may be a second system 112 that can communicate with the first system 100. The systems are schematically distinguished by a system boundary 114. Assume that the second system uses a certain combination of NBBs for some or all of its operations. That is, the second system may perform processing that involves a zip code, street name, or other data to which these building blocks correspond. There may therefore be created a CBB 116 in the second system, with which CBB is associated both the CBB 108A; as indicated by an arrow 118, and the NBB 102A, as indicated by an arrow 120.

The CBB 116 has associated with it methods of the underlying NBB and CBB: the method 104A of the NBB 102A, and the methods 104B and 104C of the CBB 108A. Similarly, the CBB 116 has associated with it relationships of the underlying NBB and CBB: the relationship 106A of the NBB 102A and the relationship 106C of the CBB 108A. If the CBB 108A includes a relationship 122 to the CBB 108B, this relationship may be inherited by the CBB 116. The relationship 106B of the NBB 102B identifies the NBB 102C that is also included in the CBB 116. This kind of relationship may be ignored when creating the CBB 108A and it is possibly not inherited by the CBB 116.

The second system 112 can call the CBB 116 as schematically indicated by an arrow 124. For example, the second system can call the CBB 116 to execute any method available there, or to navigate to a building block according to any relationship available there. The second system can call the CBB 108B as indicated by an arrow 126. That is, the second system can directly call a building block stored in the first system also without a specific building block having been created in the second system. The second system also can call any NBB directly, for example the NBB 102D as indicated by an arrow 128.

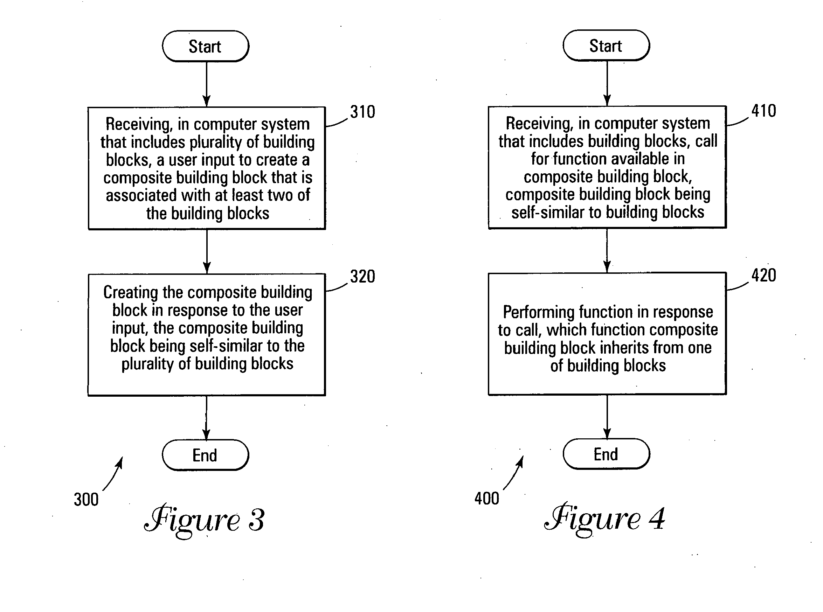

There will now be described, with reference also to Figures 3 and 4, examples of methods that can be performed in a computer system that includes building blocks. Figure 3 is a flow chart of a method 300 of creating a building block in a computer system. The method 300 may be performed in the system 100. For example, a computer program product may include instructions that cause a processor to perform operations comprising the steps of the method 300. The method 300 includes the following steps:

Receiving, in step 310 and in a computer system that includes a plurality of building blocks, a user input to create a composite building block that is associated with at least two of the building blocks. For example, a user may make an input in the system 100 to create the CBB 108A. The user input may specify that the CBB 108A be associated with the NBBs 102B and 102C.

Creating, in step 320, the composite building block in response to the user input. The composite building block is self-similar to the plurality of building blocks. For example, the system 100 may create the CBB 108A, which is self-similar to the NBBs, in response to the received user input.

Figure 4 is a flow chart of a method 400 of using building blocks. The method 400 may be performed in the system 100. For example, a computer program product may include instructions that cause a processor to perform operations comprising the steps of the method 400. The method 400 includes the following steps:

Receiving, in step 410 and in a computer system that includes building blocks, a call for a function available in a composite building block. The composite building block is self-similar to the building blocks. For example, there may be received in system 100, from an application program, a call for the CBB 108A. As other examples, the second system 112 may call the CBB 108A using the CBB 116 (as indicated by the arrow 118), or the second system may call the CBB 108B (as indicated by the arrow 126).

Performing, in step 420, the function in response to the call, which function the composite building block inherits from one of the building blocks. For example, the function may be an executable method or a relationship for navigation. That is, the first system 100 may execute the method, or perform the navigation; in response to the received call. The method may be performed on the underlying building block.

Some systems can use root building blocks. For example, the user input that triggers creation of a composite building block may specify that one building block is a root building block for the composite building block. That is, it may be specified upon creating the CBB 108A that the NBB 102B is the root building block. The CBB may be given an identifier that is based on identifiers of the NBBs, including the root building block. For example, the CBB identifier may begin with the root building block identifier. Moreover, the CBB identifier may be extended with identifier(s) of the other underlying building blocks.

Particularly, when the CBB is associated with several building blocks that include relationships to-each other so that they form an order of the building blocks, the order may be taken into account when constructing the CBB identifier. For example, the relationships 106 between the NBBs 102 may define an order thus: NBB 102A to NBB 102B to NBB 102C to NBB 102D. The CBB identifier may begin with the root building block identifier and may be extended with the identifiers of the remaining building blocks in the order that the relationships specify.

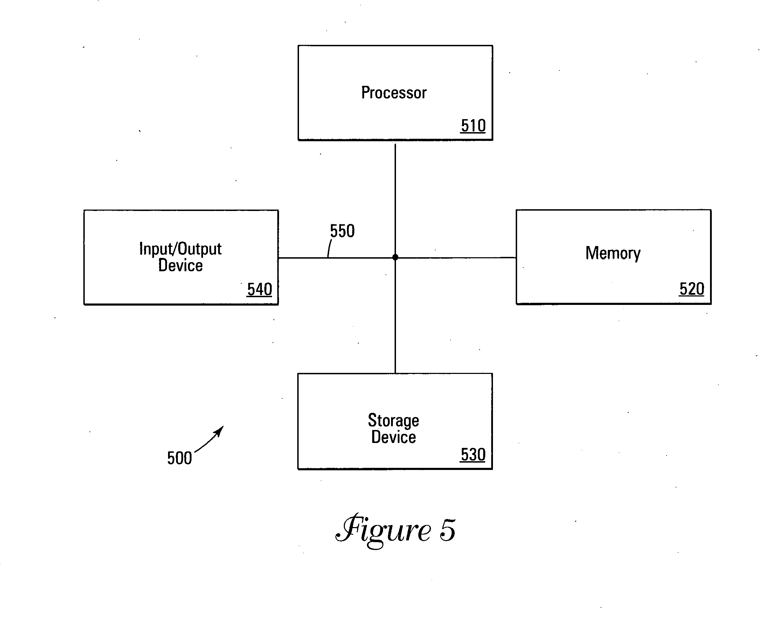

Figure 5 is a block diagram of a computer system 500 that can be used in the operations described above, according to one embodiment. The system 500 includes a processor 510, a memory 520, a storage device 530 and an input/output device 540. Each of the components 510, 520, 530 and 540 are interconnected using a system bus 550. For example, any or all of the first system 100 or second system 112 may include the system 500.

The processor 510 is capable of processing instructions for execution within the system 500. ln one embodiment, the processor 510 is a single-threaded processor. ln another embodiment, the processor 510 is a multi-threaded processor. The processor 510 is capable of processing instructions stored in the memory 520 or on the storage device 530 to display graphical information for a user interface on the input/output device 540. Particularly, the processor 510 can execute suitable instructions for the above-described creation or use of building blocks.

The memory 520 stores information within the system 500. In one embodiment, the memory 520 is a computer-readable medium. In one embodiment, the memory 520 is a volatile memory unit. In another embodiment, the memory 520 is a non-volatile memory unit.

The storage device 530 is capable of providing mass storage for the system 500. ln one embodiment, the storage device 530 is a computer-readable medium. In various different embodiments, the storage device 530 may be a floppy disk device, a hard disk device, an optical disk device, or a tape device.

The memory 520, the storage device 530, or both, may hold the building blocks described herein. As another example, any or both of them may hold an application program that makes a call as described herein.

The input/output device 540 provides input/output operations for the system 500. ln one embodiment, the input/output device 540 includes a keyboard and/or pointing device. ln some embodiments, the input/output device 540 includes a display unit for displaying graphical user interfaces. Particularly, the input/output device 540 may include interface(s) for making input(s) to create a composite building block.

The invention can be implemented in digital electronic circuitry, or in computer hardware, firmware, software, or in combinations of them. Apparatus of the invention can be implemented in a computer program product tangibly embodied in an information carrier, e.g., in a machine-readable storage device or in a propagated signal, for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The invention can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of embodiments of the invention have been described. Nevertheless, it will be understood that various modifications may be made without departing from the spirit and scope of the invention. For example, building blocks can correspond not only to address portions but to any type of information, such as a product name or a type of product. Accordingly, other embodiments are within the scope of the following claims.

## Claims

1. A method of creating a building block in a computer system, the method comprising:
receiving, in a computer system that includes a plurality of building blocks, a user input to create a composite building block that is associated with at least two of the building blocks; and
creating the composite building block in response to the user input, the composite building block being self-similar to the plurality of building blocks.

2. The method of claim 1, wherein creating the composite building block comprises associating with the composite building block a method of one of the at least two building blocks.

3. The method of claim 2, wherein during runtime the method is called in the composite building block, further comprising executing the method in the one of the at least two building blocks.

4. The method of claim 2, wherein the method is one selected from the group consisting of: a read method, a write method, a data verification method, and combinations thereof.

5. The method of claim 4, wherein the composite building block further comprises data gathered using the read method.

6. The method of claim 1, wherein creating the composite building block comprises associating a relationship of one of the at least two building blocks with the composite building block.

7. The method of claim 6, wherein the relationship allows navigation from the composite building block to another of the plurality of building blocks.

8. The method of claim 6, wherein the relationship is associated upon determining that the relationship does not identify another of the at least two building blocks.

9. The method of claim 1, wherein creating the composite building block is a declarative mapping.

10. The method of claim 1, wherein the composite building block is self-similar to the plurality of building blocks because the composite building block has a common behavior with the plurality of building blocks.

11. The method of claim 10, wherein the common behavior includes that the composite building block makes a method available for execution and makes a relationship available for navigation.

12. The method of claim 1, wherein the user input specifies that one of the at least two building blocks is a root building block.

13. The method of claim 12, wherein the root building block is associated with a first identifier, further comprising associating a second identifier with the composite building block, the second identifier beginning with the first identifier.

14. The method of claim 13, wherein another of the at least two building blocks is associated with a third identifier, further comprising extending the second identifier with the third identifier after the first identifier.

15. The method of claim 13, wherein the composite building block is associated with several of the building blocks including the at least two building blocks, and wherein each of the several building blocks includes a relationship to another of the several building blocks forming an order of the several building blocks, further comprising extending the second identifier, after the first identifier, with identifiers of the several building blocks in the order of the several building blocks.

16. The method of claim 1, wherein the composite building block and the building blocks are stored in a repository of the computer system.

17. The method of claim 1, wherein the composite building block is stored in another computer system that communicates with the computer system.

18. The method of claim 1, further comprising creating an additional composite building block that is associated with the composite building block and at least one other of the building blocks.

19. A computer program product tangibly embodied in an information carrier, the computer program product including instructions that, when executed, cause a processor to perform operations comprising:
receive, in a computer system that includes a plurality of building blocks, a user input to create a composite building block that is associated with at least two of the building blocks; and
create the composite building block in response to the user input, the composite building block being self-similar to the plurality of building blocks.

20. A method of using building blocks, the method comprising:
receiving, in a computer system that includes building blocks, a call for a function available in a composite building block, the composite building block being self-similar to the building blocks; and
performing the function in response to the call, which function the composite building block inherits from one of the building blocks.

21. The method of claim 20, wherein the function is a method of one of the at least two building blocks.

22. The method of claim 21, wherein the method is executed in the one of the at least two building blocks.

23. The method of claim 21, wherein the method is one selected from the group consisting of: a read method, a write method, a data verification method, and combinations thereof.

24. The method of claim 23, wherein the composite building block further comprises data gathered using the read method.

25. The method of claim 20, wherein the function is a relationship of one of the at least two building blocks.

26. The method of claim 25, wherein the relationship allows navigation from the composite building block to another of the building blocks.

27. The method of claim 20, wherein the call is made from another computer system that communicates with the computer system.

28. The method of claim 20, wherein another composite building block is associated with the composite building block and wherein the function is available in the other composite building block, further comprising performing the function upon receiving another call to the other composite building block.

29. A computer program product tangibly embodied in an information carrier, the computer program product including instructions that, when executed, cause a processor to perform operations comprising:
receive, in a computer system that includes building blocks, a call for a function available in a composite building block, the composite building block being self-similar to the building blocks; and
perform the function in response to the call, which function the composite building block inherits from one of the building blocks.
